# EUROPEAN PATENT SPECIFICATION

(11) **EP 0 593 126 B1**
(45) Date of publication and mention of the grant of the patent: **06.08.1997**
(21) Application number: 93202880.6
(22) Date of filing: 12.10.1993
(51) Int. Cl.: B07C 5/36, B65G 47/38

(54) **Sorting conveyor with magnetic discharge**
Sortierförderer mit magnetischer Entladung
Convoyeur de tri à décharge magnétique

(30) Priority: 12.10.1992 NL 9201762
(43) Date of publication of application: 20.04.1994
(73) Proprietor: Kirpestein, Adriaan Willem, 4191 KH Geldermalsen (NL)
(72) Inventor: Kirpestein, Adriaan Willem, 4191 KH Geldermalsen (NL)
(74) Representative: Smulders, Theodorus A.H.J., Ir.

(56) References cited:
- GB-A- 2 117 341
- US-A- 3 727 758
- US-A- 4 585 126
- PATENT ABSTRACTS OF JAPAN vol. 9, no. 92 (M-373)(1815) 20 April 1985 & JP-A-59 217 524 (ISEKI NOKI) 7 December 1984

## Description

The invention relates to a sorting conveyor of the type provided with at least one endless row of product carriers, designed as relatively narrow strips, movable along evaluating means and along a plurality of discharge stations disposed in a sorting path, wherein the carriers, responsive to signals received from the evaluating means, are tiltable from a horizontal conveying position to an inclined discharge position, which carriers are attached by one end to bearing members of an endless conveyor via tilting hinges, while at one end of the carriers a support is present preventing the carriers from tilting downwards, with the support being interrupted at the location of each discharge station and a series of electromagnets, controllable by signals from the evaluating means, being arranged in the path of each interruption, whereby it can be determined, by influencing soft iron parts provided in each of the carriers, whether or not carriers discharge their load into a specific discharge station by tilting or not, as is known from Patent Abstracts of Japan JP-A-59-217524 (Iseki Noki).

U.S.-A-3,930,995 discloses a sorting conveyor provided with at least one endless row of product carriers, tiltable from a horizontal conveying position in which they are supported one-sidedly, to a downwardly swung position, which carriers are movable along evaluating means and along a plurality of discharge stations disposed in a sorting path, and wherein control means are present for removing the support, in response to the evaluating means, so that various products are discharged at the stations intended therefor. In these known sorting conveyors, the product carriers are formed by trays that are pivotable about a pivot pin extending at right angles to the direction of conveyance, between the horizontal conveying position and a downwardly swung discharge position, with the trays in the conveying position being supported by a lock which can be moved into and out of the locking position by means of a stop pin which is rotatable by means of a solenoid. Upon arrival at a station where a specific product is to be delivered, the solenoid is operated, whereby the lock of the tray in question is pivoted out of the locking position, so that the tray tilts downwards under the influence of gravity and the product is discharged. The tray remains in the downwardly swung position until it meets a stop at the end of the sorting path, which stop swings the tray upwards into engagement with the lock.

A drawback of known conveyors with such mechanical control of the tilting of product carriers is that after the operation of any locking mechanism, the rotatable stop pin should be in the rest position again before the arrival of the next tray with a product that is not to be discharged at that location. Partly in view of the mass inertia of the solenoid and locking mechanism, this imposes limitations on the travelling speed of the conveyor.

In the sorting conveyor according to Patent Abstracts of Japan JP-A-59-217524, where the support of the product carriers is temporarily taken over by electromagnets, the drawback of slow operation is avoided. Because the control of electromagnets can be effected very quickly, the conveying speed of the apparatus can be increased at will. Further, there are no mechanisms extending into the path of movement of the carriers with which carriers may undesirably collide.

However, in the known apparatus, where soft iron parts of product carriers slide over the electromagnets disposed at the discharge stations, practical problems may occur which may adversely affect safe functioning. For instance, conveyors where tiltable carriers with a soft iron part come into direct contact with electromagnets have the drawback that wear occurs and no constant exertion of force on the soft iron parts can be ensured due to fouling.

Another drawback, inherent in a high conveying speed, is that an interruption of the carrier support on each discharge station should have a relatively great length in order to give each of the carriers sufficient time to tilt and to prevent a carrier from running against the mechanical support means at the end of the interruption.

It is further noted that the design of the carriers as relatively narrow strips extending transversely to the direction of conveyance already has the advantage that a product such as a potato, citrus fruit or the like, rests on several carriers simultaneously, so that if a single carrier should swing downwards at a station where the product in question should not be discharged, the product does not "fall". On the other hand, when the series of electromagnets at a station is made long enough, products that are not likely to "fall", such as elongated potatoes with clods of clay adhering thereto, will certainly be discharged.

The object of the invention is to provide a sorting conveyor of the subject type, wherein the above-mentioned drawbacks of the known conveyor with electromagnetic support of the tiltable carriers at the discharge stations are avoided, while the advantages are maintained.

To that end, according to the invention, the electromagnets are disposed at a settable distance from of the soft iron parts providing a gap between the soft iron parts and the electromagnets to avoid friction therebetween.

Thus, a constant air gap, at any rate a constant small distance, can be set between the soft iron parts and the electromagnets, on the one hand to avoid friction and, consequently, wear, and on the other hand to ensure a constant attraction or repulsion by the electromagnets.

In a first practical variant of the conveyor according to the invention, the series of electromagnets is arranged laterally of the interruption in the mechanical support, which moves along, at the narrow end of the free ends of the carriers. Thus, a practically constant air gap may be set and no friction between electromagnets and soft iron parts is involved. Moreover, the electromagnets are disposed laterally of the conveying path and outside the falling path of the products discharged.

In a second practical variant, in which a constant air gap and hence a constant attraction between electromagnets is always ensured, a spacer is arranged at the location of an interruption in the mechanical carrier support, between the series of electromagnets and the carrier path.

The spacer may be a smooth strip of material of a high wear resistance, for instance of Teflon; however, in a preferred embodiment of the invention, if the series of electromagnets is arranged above or below the level of the interruption, the spacer is designed as an endless chain or belt, moving in synchronization with the conveyor chain.

In the case where a series of electromagnets is disposed above the level of the interruption in the carrier support, the carriers or the soft iron parts thereof lie against the underside of the spacer belt and move at a constant distance from the electromagnets, which distance is determined by the thickness of the belt, so that a constant attraction or repulsion is always ensured. Direct contact between soft iron parts and electromagnets is avoided by the synthetic belt.

In a preferred embodiment, an interruption of the mechanical support at the location of a discharge station can be bridged by a series of electromagnets and at least one permanent magnet.

The design of this embodiment is based on the insight that in the case of an interruption of great length, which is favorable as this gives each carrier sufficient time to tilt, a limited number of costly electromagnets with associated switch gear may suffice.

In the case where carriers passing the discharge station do not have to tilt, the soft iron parts in question are influenced and held in the conveying position by the permanent magnets in the same manner as they are by the electromagnets.

In the case where carriers do have to tilt onto the station in question, it is sufficient that the electromagnets release the soft iron parts. When product carriers which have already tilted arrive in the region of the permanent magnets, they can no longer have any influence on them because the air gap has meanwhile become too great.

Preferably, the tilting hinges of the carriers are designed in synthetic material, so that they are maintenance free and cannot be influenced by the electromagnets.

To clarify the invention, some practical embodiments of the sorting conveyor with magnetic discharge will be described with reference to the accompanying drawings.
Fig. 1 is a schematic top plan view of a detail of the sorting conveyor;
Fig. 2 is an end view taken along the arrow II-II in Fig. 1;
Fig. 3 is a top plan view similar to Fig. 1, of a second embodiment of the conveyor;
Fig. 4 is a side view taken along the arrow IV-IV in Fig. 3;
Fig. 5 is a side view of an interruption in the carrier support, of a third embodiment of the conveyor;
Fig. 6 is a top plan view substantially taken on line VI-VI in Fig. 5;
Fig. 7 is a view taken on line VII-VII in Fig. 6;
Fig. 8 is a view similar to Fig. 5, of a third embodiment of the sorting conveyor; and
Fig. 9 is a view similar to Fig. 7, of the conveyor according to Fig. 8.

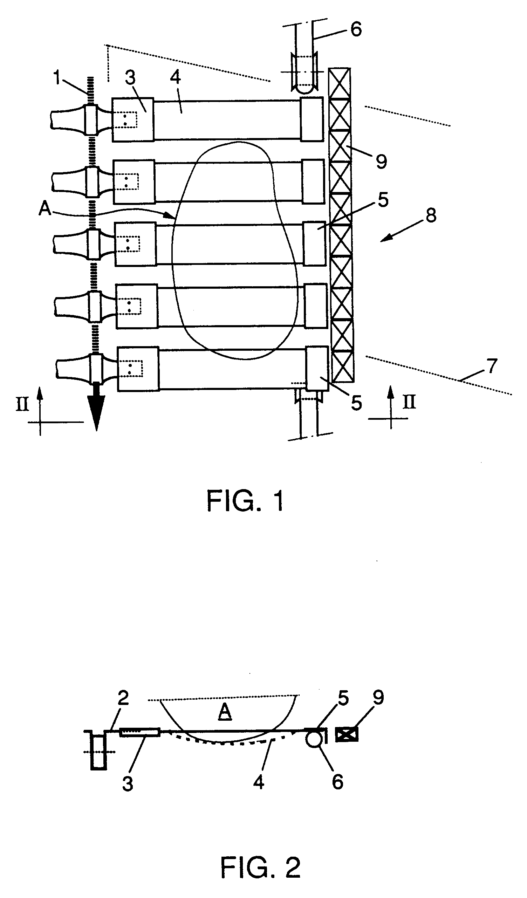

In the drawings, particularly Figs 1 and 2, strip-shaped carriers 4 for, for instance, potatoes A, are attached to a conveyor chain 1 via bearing members 2 and synthetic tilting hinges 3. The carriers 4, extending transversely to the direction of conveyance, each have a soft iron part 5 at their free end, by which they rest on a support 6, for instance in the shape of a round rope 6, moving along with the conveyor chain 1.

At the discharge station 7, the carrier support by the round rope 6 has an interruption 8 and the support is taken over by a series of electromagnets 9. As long as they are energized, the attraction of the soft iron parts 5 is sufficient to prevent the carriers 4 from tilting. Hence, a product A which is not to be discharged on the station 7 is conveyed further, also in the case where one of the strip-shaped carriers 4, collectively carrying the product A, tilts.

However, if the product A in question is intended to be discharged on the station 7, a discharge signal is given by evaluation means disposed upstream (not shown), which signal is translated by a control device, not shown either, into a temporary removal of the energization of the series of electromagnets on the station 7 in question. The product is then discharged as the carriers tilt downwards at that location. The carriers which have discharged a product remain in the downwardly tilted position until they meet a stop further on in the path which lifts the carriers to the horizontal conveying position again.

It is clear that in the embodiment of Figs 1 and 2 the gap between the soft iron parts 5 and the electromagnets 9 is critical. A safe functioning is nonetheless ensured because a product usually rests on several carriers simultaneously, due to the narrow strip shape of the carriers 4. If, for any reason, one of the carriers 4 under a product A swings downwards at a station where the product should not yet be discharged, it will be carried over the interruption by the other carriers.

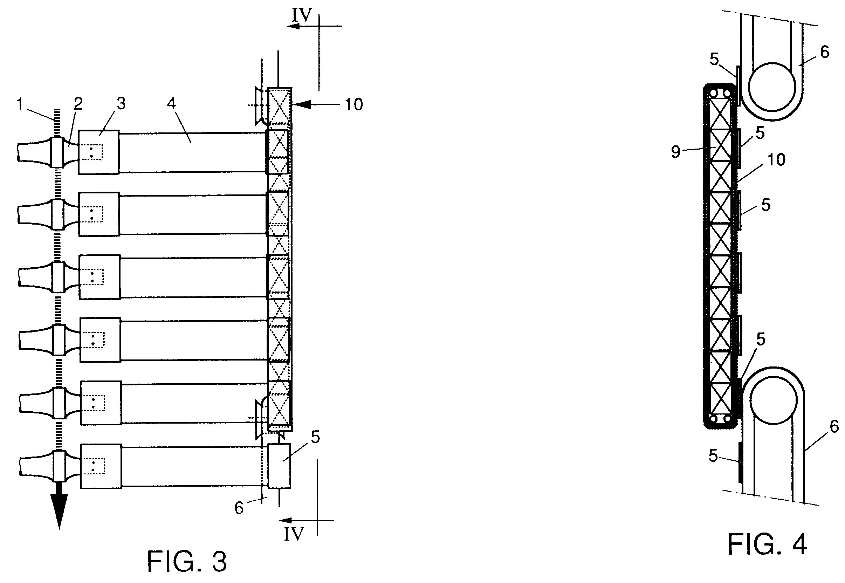

An embodiment in which a constant gap between carriers 4 and electromagnets 9 is always ensured is shown in Figs 3 and 4. In these figures, the series of electromagnets 9 is disposed above, rather than next to, the path of the soft iron parts 5 and the series is surrounded by a synthetic belt 10 moving synchronously with the conveyor 1. As is clearly shown in Fig. 4, at an interruption 8 the soft iron parts 5 are delivered against the underside of the belt 10 and move over the interruption at a constant distance from the series of electromagnets 9, which distance is determined by the thickness of the belt 10.

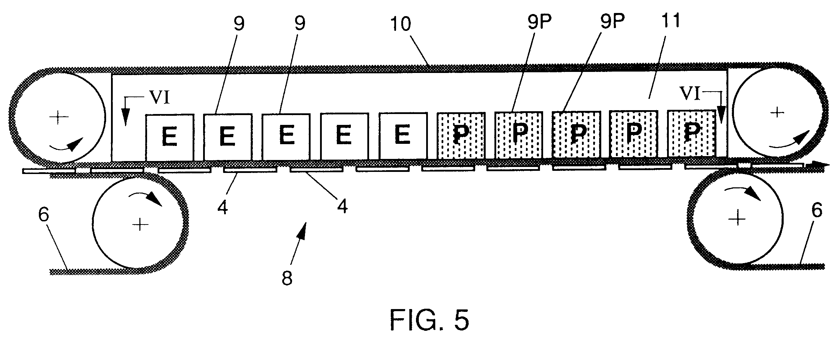

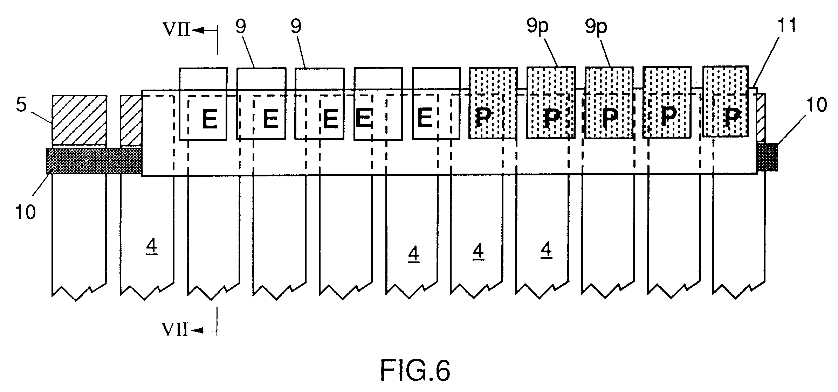

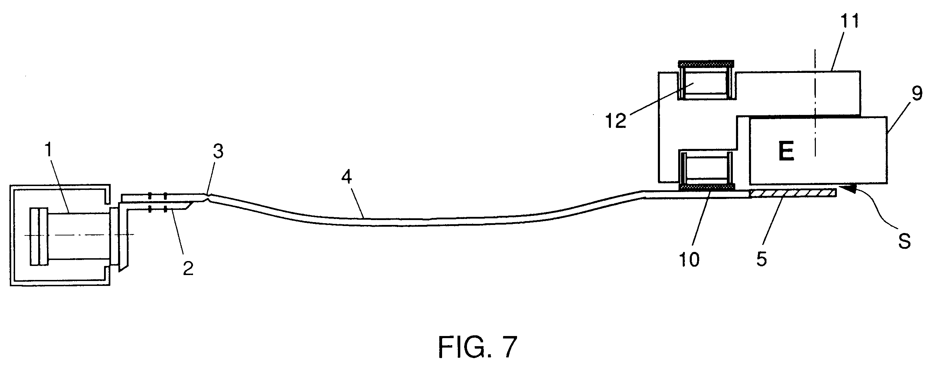

The embodiment of Figs 5-7 differs from that of Figs 3 and 4 in that the magnets are accommodated in a housing 11, in which also an endless chain 12 carrying the endless spacer belt 10 is bearing-mounted, the carriers bearing on the belt 10 and thus a constant air gap S between the soft iron parts 5 and the magnets is ensured. In this embodiment it is further indicated that the interruption 8 in the path of the carrier support 6 is bridged by a plurality of electromagnets 9 and a plurality of permanent magnets 9p.

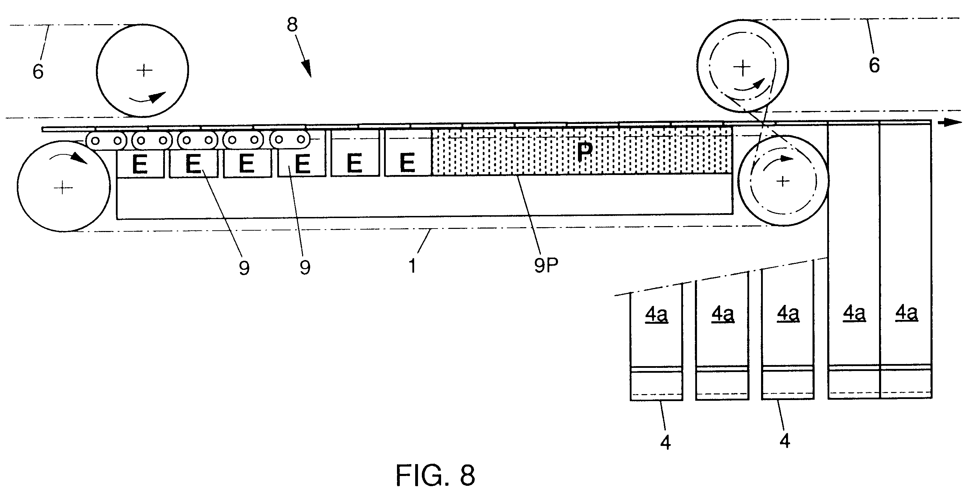

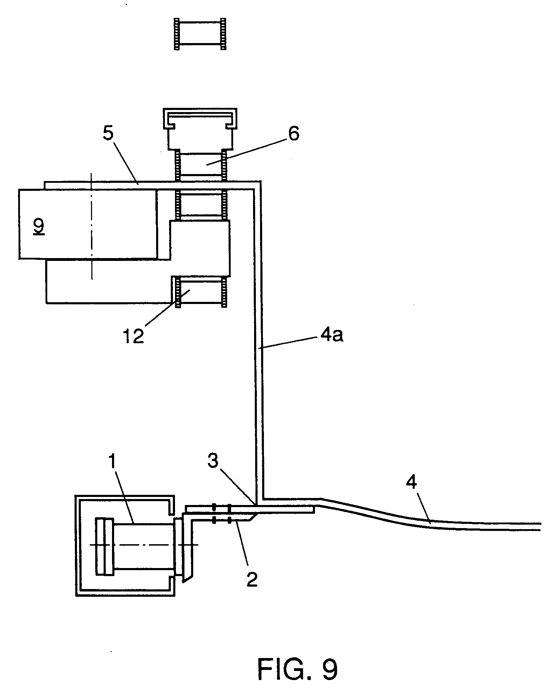

The embodiment according to Figs 8 and 9 differs from the embodiment described hereinabove in that the carriers are designed with a product-carrying part 4, an upright part 4a disposed at the side of the hinge 2 and a soft iron part 5 provided at the top end thereof. In this case, the maintenance of a constant gap width between the soft iron parts 5 and the magnets is effected by the chain 12 which itself functions as a spacer. Therefore, in this embodiment, no separate belt 10 is used. Further, in this embodiment, an assembly of a plurality of electromagnets 9 and a single long permanent magnet 9p is indicated for bridging the interruption 8 in the carrier support 6.

It is understood that the invention is not limited to the embodiments shown. The essence is that at each discharge station in a sorting path, a one-sided mechanical support of tiltable product carriers is taken over by an electromagnetic/permanently magnetic support whose electromagnetic part can be temporarily removed at will, steps being taken to ensure a constant (air gap) distance between the carriers, in particular the soft iron parts thereof, and the magnets.

## Claims

1. A sorting conveyor of the type provided with at least one endless row of product carriers (4), designed as relatively narrow strips, movable along evaluating means and along a plurality of discharge stations (8) disposed in a sorting path, wherein the carriers (4), responsive to signals received from the evaluating means, are tiltable from a horizontal conveying position to an inclined discharge position, said carriers (4) being attached by one end to bearing members (2) of an endless conveyor (1) via tilting hinges (3), while at one end of the carriers a support (6) is present preventing the carriers (4) from tilting downwards, with the support (6) being interrupted at the location of each discharge station (8) and a series of electromagnets (9), controllable by signals from the evaluating means, being arranged in the path of each interruption, whereby it can be determined, by influencing soft iron parts (5) provided in each of the carriers (4), whether or not carriers (4) discharge their load into a specific discharge station (8) by tilting or not, characterized in that the series of electromagnets (9) is disposed at a settable distance from the path of the soft iron parts (5) providing a gap between the soft iron parts and the electromagnets to avoid friction therebetween.

2. A conveyor according to claim 1, characterized in that the series of electromagnets (9) is arranged laterally of the interruption (8) in the mechanical support (6), at the narrow end of the free ends of the carriers (4).

3. A conveyor according to claim 1, characterized in that a spacer (10, 12) is arranged at the location of an interruption (8) in the mechanical carrier support (6), between the series of electromagnets (9) and the carrier path.

4. A conveyor according to claim 3, wherein the series of electromagnets (9) is arranged above or below the level of the interruption (8), characterized in that the spacer is designed as an endless chain (12) and/or belt (10), moving in synchronization with the conveyor chain (1).

5. A conveyor according to any one of the preceding claims, characterized in that an interruption (8) of the mechanical support (6) at the location of a discharge station (7) is bridged by a series of electromagnets (9) and at least one permanent magnet (9p).

6. A conveyor according to any one of the preceding claims, characterized in that the tilting hinges (3) of the carriers (4) are designed in synthetic material.

## Patentansprüche

1. Sortierförderer des Typs, der mit zumindest einer endlosen Reihe von als relativ enge Streifen ausgestalteten Produktträgern (4) versehen ist, die entlang Auswertungsmitteln und entlang einer Vielzahl von in einem Sortierpfad angeordneten Entladestationen (8) bewegbar sind, wobei die Produktträger (4), die auf von den Auswertungsmitteln empfangene Signale ansprechen, von einer horizontalen Förderposition zu einer geneigten Entladeposition kippbar sind, die Träger (4) mit einem Ende an Lagerungsteilen (2) eines endlosen Förderers (1) über Kippscharniere (3) befestigt sind, während an einem Ende der Träger eine Lagerung (6) vorhanden ist, die verhindert, daß die Träger (4) abwärts kippen, wobei die Lagerung (6) an dem Ort jeder Entladestation (8) unterbrochen wird und eine Reihe von durch Signale der Auswertungsmittel steuerbaren Elektromagneten (9) im Pfad jeder Unterbrechung angeordnet ist, wodurch mittels Beeinflussung der in jedem der Träger (4) vorgesehenen Weicheisenteile (5) bestimmt werden kann, ob oder ob nicht Träger (4) ihre Ladung in einer speziellen Entladestation (8) durch Kippen, oder nicht, entladen,
dadurch **gekennzeichnet,**
daß die Reihe der Elektromagneten (9) mit einem festsetzbaren Abstand vom Pfad der Weicheisenteile (5) angeordnet ist, der einen Spalt zwischen den Weicheisenteilen und den Elektromagneten vorsieht, um Reibung dazwischen zu vermeiden.

2. Förderer nach Anspruch 1,
dadurch **gekennzeichnet,**
daß die Reihe der Elektromagneten (9) seitlich der Unterbrechung (8) in der mechanischen Lagerung (6) an dem schmalen Ende der freien Enden der Träger (4) angeordnet ist.

3. Förderer nach Anspruch 1,
dadurch **gekennzeichnet,**
daß ein Abstandhalter (10, 12) am Ort einer Unterbrechung (8) in der mechanischen Trägerlagerung (6) zwischen der Reihe der Elektromagneten (9) und dem Trägerpfad angeordnet ist.

4. Förderer nach Anspruch 3,
wobei die Reihe der Elektromagneten (9) oberhalb oder unterhalb des Niveaus der Unterbrechung (8) angeordnet ist,
dadurch **gekennzeichnet,**
daß der Abstandhalter als eine endlose Kette (12) und/oder als ein Gurtband (10) gestaltet ist, die/das sich in Synchronisation mit der Förderkette (1) bewegt.

5. Förderer nach einem der vorhergehenden Ansprüche,
dadurch **gekennzeichnet,**
daß eine Unterbrechung (8) der mechanischen Lagerung (6) am Ort einer Entladestation (7) durch eine Reihe von Elektromagneten (9) und zumindest einen Permanentmagneten (9p) überbrückt ist.

6. Förderer nach einem der vorhergehenden Ansprüche,
dadurch **gekennzeichnet,**
daß die Kippscharniere (3) der Träger (4) aus Kunststoff gestaltet sind.

## Revendications

1. Un convoyeur de tri du type muni d'au moins une rangée sans fin de porteurs de produits (4), conçus comme des bandes relativement étroites, mobiles le long de moyens d'évaluation et le long d'une pluralité de stations de décharge (8) disposées dans une voie de tri, dans lequel les porteurs (4), en réponse à des signaux reçus par les moyens d'évaluation, sont inclinables depuis une position de convoyage horizontale à une position de décharge inclinée, lesdits porteurs (4) étant liés par une extrémité à des éléments portants (2) d'un convoyeur sans fin (1) via des charnières d'inclinaison (3), tandis qu'à une extrémité des porteurs, un support (6) est présent pour empêcher les porteurs (4) de s'incliner vers le bas, le support (6) étant interrompu à l'endroit de chaque station de décharge (8) et une série d'électro-aimants (9), pouvant être commandés par des signaux depuis les moyens d'évaluation, étant disposés dans la voie de chaque interruption, de manière qu'ils puissent être déterminés, en influençant des parties en fer doux (5) prévues dans chacun des porteurs (4), si ou non les porteurs (4) déchargent leur charge dans une station de décharge spécifique (8) par inclinaison ou pas, caractérisé en ce que la série d'électro-aimants (9) est disposée à une distance réglable depuis la voie des parties en fer doux (5) fournissant un interstice entre les parties en fer doux et les électro-aimants pour éviter toute friction entre eux.

2. Un convoyeur conforme à la revendication 1, caractérisé en ce que la série d'électro-aimants (9) est disposée latéralement à l'interruption (8) dans le support mécanique (6), à l'extrémité étroite des extrémités libres des porteurs (4).

3. Un convoyeur conforme à la revendication 1, caractérisé en ce qu'un espaceur (10, 12) est disposé à l'endroit d'une interruption (8) dans le support de porteurs mécanique (6), entre la série d'électro-aimants (9) et la voie de porteurs.

4. Un convoyeur conforme à la revendication 3, dans lequel la série électro-aimants (9) est disposée au-dessus ou au-dessous du niveau de l'interruption (8), caractérisé en ce que l'espaceur est conçu comme une chaîne (12) et/ou une courroie (10) sans fin, se déplaçant en synchronisation avec la chaîne de convoyeur (1).

5. Un convoyeur conforme à l'une quelconque des revendications précédentes, caractérisé en ce qu'une interruption (8) du support mécanique (6) à l'endroit d'une station de décharge (7) est pontée par une série d'électro-aimants (9) et au moins un aimant permanent (9p).

6. Un convoyeur conforme à l'une quelconque des revendications précédentes, caractérisé en ce que les charnières d'inclinaison (3) des porteurs (4) sont conçues en une matière synthétique.
